# EUROPÄISCHE PATENTSCHRIFT

(11) **EP 1 301 379 B1**
(45) Veröffentlichungstag und Bekanntmachung des Hinweises auf die Patenterteilung: **07.06.2006**
(21) Anmeldenummer: 01951417.3
(22) Anmeldetag: 21.06.2001
(51) Int. Cl.: B60S 1/04, F16F 15/08, F16F 1/373

(54) **BEFESTIGUNG EINER WISCHERPLATINE**
WIPER BOARD FIXTURE
SYSTEME DE FIXATION D'UN SUPPORT D'ESSUIE-GLACE

(30) Priorität: 08.07.2000 DE 10033383
(43) Veröffentlichungstag der Anmeldung: 16.04.2003
(73) Patentinhaber: ROBERT BOSCH GMBH, 70442 Stuttgart (DE); DaimlerChrysler AG, 70567 Stuttgart (DE)
(72) Erfinder: KNAUF, Richard, F-67480 Roppenheim (FR); DÜSTERHÖFT, Richard, 71088 Holzgerlingen (DE)
(86) Internationale Anmeldenummer: PCT/DE2001/002294
(87) Internationale Veröffentlichungsnummer: WO 2002/004263

(56) Entgegenhaltungen:
- DE-A- 3 116 821
- FR-A- 2 733 473
- US-A- 4 557 622
- US-A- 5 960 512
- PATENT ABSTRACTS OF JAPAN vol. 2000, no. 14, 5. März 2001 (2001-03-05) & JP 2000 318578 A (ASMO CO LTD), 21. November 2000 (2000-11-21)

## Beschreibung

### Stand der Technik

Die Erfindung geht von einer Befestigung einer Wischerplatine nach dem Oberbegriff des Anspruchs 1 aus.

Derartige Wischerplatinen werden insbesondere in Kraftfahrzeugen eingesetzt, um Wischeranlagen an der Karosserie des Kraftfahrzeugs zu befestigen. Die Wischerplatine umfasst eine Motorplatine, die einen Wischerantrieb mit einem Wischermotor und einem daran angebauten Getriebe trägt. Eine Abtriebswelle des Getriebes treibt in der Regel über eine Kurbel und Gelenkstangen Kurbeln an, die mit einer Antriebswelle für jeden Scheibenwischer fest verbunden sind. Die Antriebswellen sind in Wischerlagern gelagert, deren Lagergehäuse an den Enden der Platine befestigt oder angeformt sind. Die Platine ist unmittelbar über die Lagergehäuse oder über Befestigungsaugen, die am Lagergehäuse, an der Platine und/oder der Motorplatine angeformt sind, mit Gummielastelementen an einer Fahrzeugkarosserie befestigt. Derartige Wischerplatinen sind z.B. aus der EP 0 781 691 A1 bekannt.

Aus der DE 36 21 233 C2 ist ferner ein Wischblatt zum Reinigen von gekrümmten Scheiben von Kraftfahrzeugen bekannt. Um ein gutes Wischergebnis auf einer ebenen Fahrzeugscheibe zu erreichen, müsste das Wischblatt so angeordnet werden, dass seine Längsmittelebene senkrecht auf der Scheibe steht, wenn das Wischblatt entlastet ist und eine an die Wischleiste angeformte Wischlippe die Scheibenoberfläche lediglich berührt. Bei sphärisch'gekrümmten Fahrzeugscheiben ändert sich die Neigung dieser Längsmittelebene zur Scheibenoberfläche über das gesamte Wischfeld. Ferner ändert sich die Neigung der Längsmittelebene auch in Längsrichtung des Wischblatts. Somit kann die optimale Ausrichtung bei sphärisch gekrümmten Fahrzeugscheiben während des Wischbetriebs nur punktuell und in Längsrichtung des Wischblatts wandernd erreicht werden. Dabei sind die Abweichungen von der Senkrechten, der Normalen zur Fahrzeugscheibe, die in Winkelgraden gemessen und Normalenabweichungen oder Normalenfehler genannt werden, in den stärker gekrümmten Seitenbereichen der Fahrzeugscheibe größer als in den ebenen Mittelbereichen. Die Flexibilität des Wischgummis kann die Normalenabweichung nur teilweise ausgleichen.

In der Praxis wird der erforderliche Anstellwinkel des Wischblatts relativ zur Scheibe und damit der Normalenfehler meist durch Schrägstellen der Antriebsachsen der Scheibenwischer erzeugt. Sie nehmen somit eine gewünschte, von einer senkrechten Lage zur Fahrzeugscheibe abweichende Lage ein. Der gewünschte Normalenfehler wird in der Regel bei der Montage der Wischerplatine eingestellt, indem diese relativ zur Fahrzeugscheibe gekippt wird. Dazu ist mindestens eine Befestigungsstelle der Wischerplatine an der Fahrzeugkarosserie einstellbar.

### Vorteile der Erfindung

Nach der Erfindung schließen im Bereich der dritten Befestigungsstelle einander gegenüberliegende Anlageflächen der Wischerplatine einerseits und eines unlösbar an der Fahrzeugkarosserie befestigten Halteelements andererseits einen Winkel δ ein. Zwischen den Anlageflächen ist ein Gummielastelement durch eine Schraube eingespannt, dessen Stirnflächen den Anlageflächen entsprechen. Nach dem Lösen der Schraube kann das keilförmige Gummielastelement zwischen den Anlageflächen der Wischerplatine und des Halteelements in Richtung der Neigung der Anlageflächen zueinander verstellt werden, so dass sich der Abstand der Wischerplatine vom Halteelement verändert. Da die Wischerplatine an den übrigen Befestigungsstellen elastisch gelagert ist, wird sie um eine gedachte Achse durch die beiden anderen Befestigungspunkte gekippt, so dass die mit der Wischerplatine fest verbundenen Wischerlager einen entsprechend geänderten Winkel zur Fahrzeugscheibe einnehmen. Ist der richtige Winkel eingestellt, wird das Gummielastelement durch die Schraube wieder zwischen den Anlageflächen der Wischerplatine und des Halteelements verspannt. Es werden somit für die Einstellung und Befestigung nur wenige Bauteile benötigt. Ferner ergibt sich eine einfache Montage und Einstellung, bei der nur eine Schraube gelöst zu werden braucht.

In der Regel reicht der Reibschluß zwischen der Anlagefläche der Wischerplatine bzw. der Anlagefläche des Halteelements und den Stirnflächen des Gummielastelements aus, um die eingestellte Position beizubehalten. Um jedoch den Kraftschluß durch einen Formschluß zu verbessern, wird gemäß einer Ausgestaltung der Erfindung vorgeschlagen, dass mindestens eine Stirnfläche des Gummielastelements aus einem harten Werkstoff besteht und mit der zugeordneten Anlagefläche eine ineinander greifende Verzahnung aufweist, die quer zur Neigung der Anlageflächen verläuft. Die Verzahnung erleichtert ferner den Einstellvorgang, da in kleinen, definierten Stufen der Winkel verändert werden kann.

Das Gummielastelement besitzt für den Durchgang der Schraube ein Langloch, dessen größte Erstreckung in Richtung der Neigung der Anlageflächen verläuft. Dadurch wird ein möglichst großer Verstellweg ermöglicht, ohne dass die Querschnittfläche des Gummielastelements durch das Loch zu sehr geschwächt wird. Zweckmäßigerweise stabilisiert eine Führungshülse aus einem harten Werkstoff, die in den gummielastischen Teil des Gummielastelements eingreift, dessen Lage quer zur Auflagefläche, insbesondere wenn die der Auflagefläche zugeordnete Stirnfläche des Gummielastelements von einem Flansch der Führungshülse gebildet wird.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer Scheibenwischeranlage,
- Fig. 2: ein vergrößertes Detail entsprechend der Linie II-II in Fig. 1 im Schnitt und
- Fig. 3: einen Querschnitt durch ein Wischblatt.

### Beschreibung des Ausführungsbeispiels

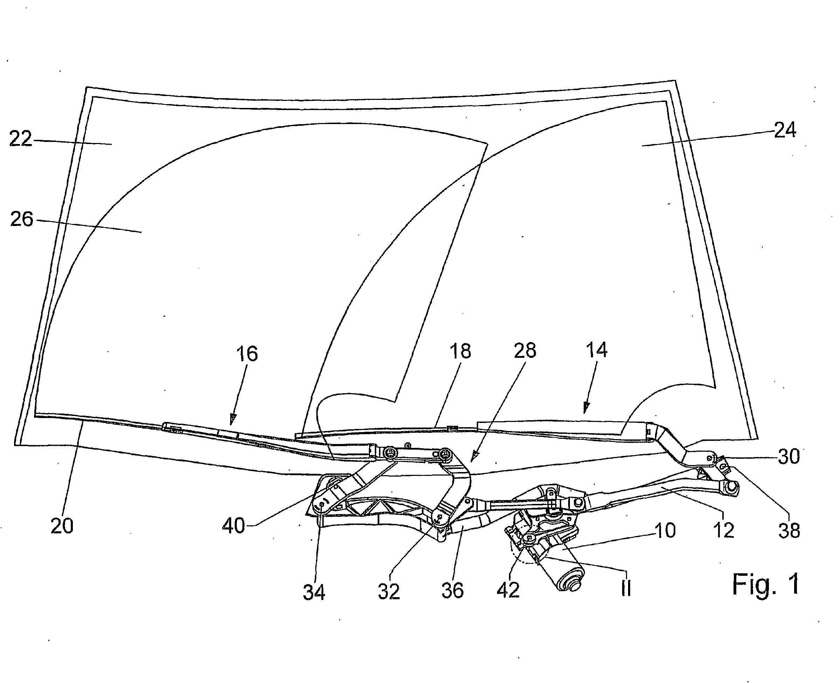

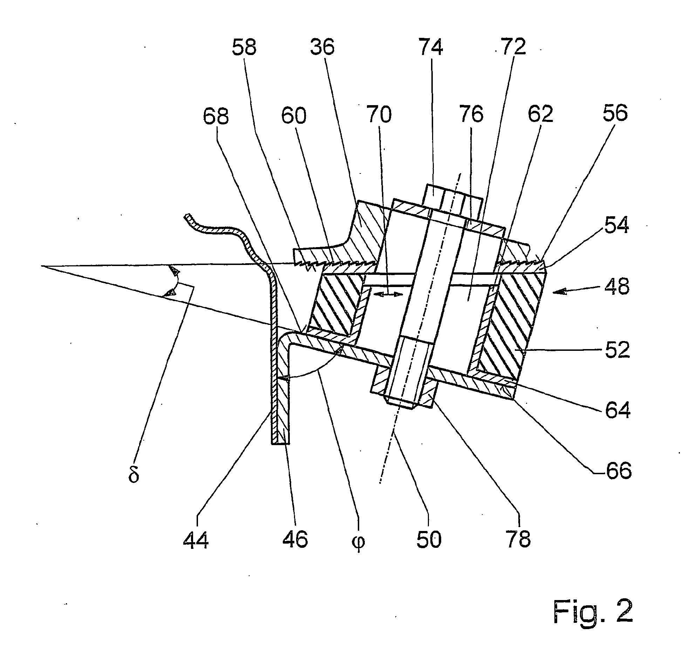

Die Wischeranlage nach Fig. 1 besitzt einen Wischermotor 10, der über ein Wischergestänge 12 zwei Scheibenwischer 14 und 16 antreibt. Während einer Wischbewegung bewegen sich die Scheibenwischer 14 und 16 mit ihren Wischblättern 18 bzw. 20 über Wischfelder 24 bzw. 26 einer Fahrzeugscheibe 22. Während der Scheibenwischer 14 in einem Wischerlager 30 gelagert ist, wird der Scheibenwischer 16 über einen Viergelenkwischhebel 28 angetrieben, der in Wischerlagern 32, 34 gelagert ist. Die Wischerlager 30, 32, 34 sind zusammen mit dem Wischermotor 10 an einer Wischerplatine 36 angeordnet, die an drei Befestigungsstellen 38, 40, 42 an einer Fahrzeugkarosserie 44 (Fig. 2) befestigt ist. Während die erste und zweite Befestigungsstelle 38 bzw. 40 in der Nähe der Wischerlager 30, 32, 34 angeordnet sind, befindet sich die dritte Befestigungsstelle 42 in der Nähe des Wischermotors 10.

Die dritte Befestigungsstelle 42 ist in Fig. 2 im Schnitt in einem größeren Maßstab dargestellt. Sie umfasst ein winkelförmiges Halteelement 46, das fest und unlösbar mit der Fahrzeugkarosserie 44 verbunden ist. Eine Anlagefläche 68 am freien Schenkel des Halteelements 46 bildet mit der Wand der Fahrzeugkarosserie 44 einen Winkel ϕ, der im dargestellten Beispiel kleiner 90° ist. Auf der Anlagefläche 68 ist ein Gummielastelement 48 montiert, dessen Stirnflächen 56, 66 zwischen der Anlagefläche 68 des Halteelements 46 und einer Anlagefläche 58 der Wischerplatine 36 mittels einer Schraube 74 und einer Schraubenmutter 78 eingespannt ist. Zwischen dem Schraubenkopf der Schraube 74 und der Wischerplatine 36 ist eine Scheibe 76 vorgesehen, um die Flächenpressung zu reduzieren und das Loch 72 für den Durchgang der Schraube abzudecken.

Die Anlagefläche 58 der Wischerplatine 36 verläuft unter einem Winkel δ geneigt zu der Anlagefläche 68 des Halteelements 46. Entsprechend verlaufen die Stirnflächen 56 bzw. 66 des Gummielastelements 48. Die Neigung ist durch einen Pfeil 70 gekennzeichnet. Der Winkel δ wird so gewählt, dass sich ein ausreichender Verstellweg für die Wischerplatine 36 senkrecht zur Auflagefläche 58 ergibt, wenn das Gummielastelement 48 quer zu einer Längsachse 50 in Richtung der Neigung 70 verstellt wird.

Bei dem Ausführungsbeispiel besitzt das Gummielastelement 48 zur Wischerplatine 36 hin eine Deckscheibe 54 aus einem härteren Werkstoff, die die Stirnfläche 56 bildet. In die Stirnfläche 56 der Deckscheibe 54 und in die Anlagefläche 58 der Wischerplatine 36 ist eine Verzahnung 60 eingearbeitet, die quer zur Neigung 70 verläuft. Sie dient zum einen dazu, dass der durch die Schraube 74 erzeugte Kraftschluß durch einen Formschluß verstärkt wird, und zum anderen dazu, dass das Gummielastelement 48 in kleinen Stufen definiert und leicht mit wenigen Handgriffen eingestellt werden kann.

Das Loch 72 für den Durchgang der Schraube 74 ist als Langloch ausgebildet. Seine größte Erstreckung liegt in Richtung der Neigung 70, so dass bei geringer Schwächung des Querschnitts des Gummielastelements 48 ein großer Verstellweg erreicht wird. In das Langloch 72 greift eine Führungshülse 62, die den gummielastischen Teil 52 des Gummielastelements 48 quer zur Längsachse 50 versteift. Die Führungshülse 62 besitzt einen Flansch 64. Dieser bildet die Stirnfläche 66, die an der Anlagefläche 68 des Halteelements 46 anliegt. Zwischen der Führungshülse 62 und der Deckscheibe 54 ist ein Freiraum gelassen, damit der gummielastische Teil 52 einen ausreichenden Federweg besitzt.

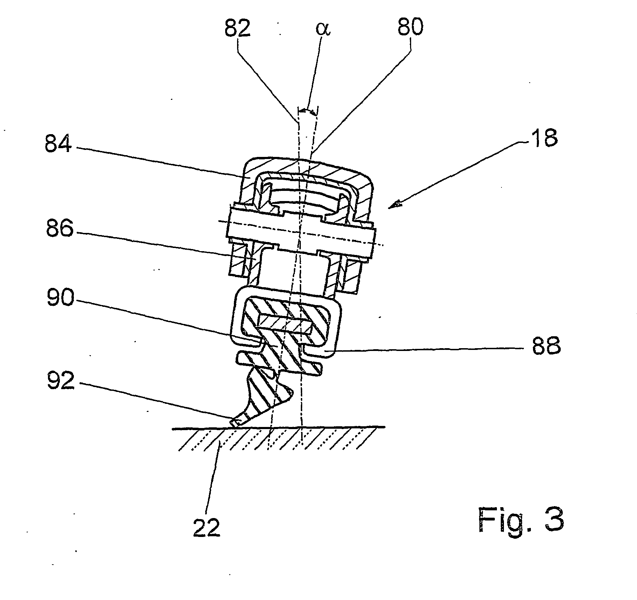

Fig. 3 zeigt einen Querschnitt durch das Wischblatt 18. Die Längsmittelebene 80 des Wischblatts 18 verläuft um einen Winkel α geneigt zur Normalen 82 der Fahrzeugscheibe 22. Der Winkel α wird als Normalenfehler oder Normalenabweichung bezeichnet. Durch die Einstellung der dritten Befestigungsstelle 42 kann der Winkel α in gewünschter Weise verändert werden. Das Wischblatt 18 besteht im wesentlichen aus einem Tragbügelsystem 84, dessen Krallenbügel 86 mit seinen Krallen 88 eine Wischleiste 90 hält. Diese liegt mit einer Wischlippe 92 an der Fahrzeugscheibe 22 an.

## Patentansprüche

1. Befestigung einer Wischerplatine (36) an mindestens drei Befestigungsstellen (38, 40, 42) einer Fahrzeugkarosserie (44) mittels elastischer Lager (48), wobei die erste und zweite Befestigungsstelle (38, 40) in der Nähe von Wischerlagern (30, 32, 34) und die dritte Befestigungsstelle (42) nahe einem Wischermotor (10) angeordnet sind und die dritte Befestigungsstelle (42) so einstellbar ist, dass die Wischerplatine (36) um eine gedachte Achse durch die erste und zweite Befestigungsstelle (38, 40) gekippt werden kann, **dadurch gekennzeichnet, dass** im Bereich der dritten Befestigungsstelle (42) einander gegenüberliegende Anlageflächen (58, 68) der Wischerplatine (36) einerseits und eines unlösbar an der Fahrzeugkarosserie (44) befestigten Halteelements (46) andererseits einen Winkel (δ) einschließen und zwischen den Anlageflächen (58, 68) ein Gummielastelement (48) mittels einer Schraube (74) eingespannt ist, dessen Stirnflächen (56, 66) den Anlageflächen (58, 68) entsprechen.

2. Befestigung nach Anspruch 1, **dadurch gekennzeichnet, dass** mindestens eine Stirnfläche (56, 66) des Gummielastelements (48) aus einem harten Werkstoff besteht und mit der zugeordneten Anlagefläche (58, 68) eine ineinander greifende Verzahnung (60) aufweist, die quer zur Neigung (70) der Anlageflächen (58, 68) verläuft.

3. Befestigung nach einem der vorhergehenden Ansprüche, **dadurch gekennzeichnet, dass** das Gummielastelement (48) ein Langloch (72) aufweist, dessen größte Erstreckung in Richtung der Neigung (70) der Anlageflächen (58, 68) verläuft.

4. Befestigung nach Anspruch 2 oder 3, **dadurch gekennzeichnet, dass** die Stirnfläche (66) des Gummielastelements (48), die dem Halteelement (46) zugeordnet ist, von einem Flansch (64) einer Führungshülse (62) aus einem harten Werkstoff gebildet wird, die in den gummielastischen Teil (52) des Gummielastelements (48) eingreift.

## Claims

1. Fixture of a wiper board (36) at at least three fixture points (38, 40, 42) of a vehicle body (44) by means of elastic bearings (48), the first and second fixture points (38, 40) being arranged in the vicinity of wiper bearings (30, 32, 34) and the third fixture point (42) being arranged in the vicinity of a wiper motor (10), and the third fixture point (42) being settable in such a manner that the wiper board (36) can be tilted about an imaginary axis through the first and second fixture points (38, 40), **characterized in that**, in the region of the third fixture point (42), mutually opposite bearing surfaces (58, 68) of the wiper board (36), on the one hand, and of a retaining element (46) fixed nondetachably to the vehicle body (44), on the other hand, enclose an angle (δ), and a rubber-elastic element (48) whose end surfaces (56, 66) correspond to the bearing surfaces (58, 68) is clamped between the bearing surfaces (58, 68) by means of a screw (74).

2. Fixture according to Claim 1, **characterized in that** at least one end surface (56, 66) of the rubber-elastic element (48) is composed of a hard material and, with the associated bearing surface (58, 68), has an intermeshing toothing (60) which runs transversely with respect to the inclination (70) of the bearing surfaces (58, 68).

3. Fixture according to one of the preceding claims, **characterized in that** the rubber-elastic element (48) has an elongated hole (72) whose greatest extent runs in the direction of the inclination (70) of the bearing surfaces (58, 68).

4. Fixture according to Claim 2 or 3, **characterized in that that** end surface (66) of the rubber-elastic element (48) which is assigned to the retaining element (46) is formed by a flange (64) of a guide sleeve (62) made of a hard material, the guide sleeve engaging in the rubber-elastic part (52) of the rubber-elastic element (48).

## Revendications

1. Système de fixation d'une platine d'essuie-glace (36) par au moins trois points de fixation (38, 40, 42) d'une carrosserie de véhicule (44) à l'aide de paliers élastiques (48),
le premier et le second point de fixation (38, 40) étant situés à proximité des paliers d'essuie-glace (30, 32, 34) et le troisième point de fixation (42) étant situé à proximité du moteur d'essuie-glace (10), et
le troisième point de fixation (42) est réglable pour que la platine d'essuie-glace (36) puisse être basculée autour d'un axe géométrique passant par le premier et le second point de fixation (38, 40),
**caractérisé en ce que**
au niveau du troisième point de fixation (42), les surfaces d'appui en regard (58, 68) d'une part de la platine de fixation (36) et d'autre part d'un élément de fixation (46) fixé de manière solidaire à la carrosserie (44) du véhicule, font un angle (δ) et
un élément en caoutchouc (48) est serré entre les surfaces d'appui (58, 68) à l'aide d'une vis (74), les faces frontales (56, 66) de cet élément en caoutchouc correspondant aux surfaces d'appui (58, 68).

2. Système de fixation selon la revendication 1,
**caractérisé en ce qu'**
au moins une surface frontale (56, 66) de l'élément de caoutchouc (48) est en une matière dure et comporte une denture (60) venant en prise avec la surface d'appui correspondante (58, 68), cette denture étant dirigée transversalement par rapport à l'inclinaison (70) des surfaces d'appui (58, 68).

3. Système de fixation selon l'une des revendications précédentes,
**caractérisé en ce que**
l'élément en caoutchouc (48) comporte un trou oblong (72) dont la plus grande dimension est dirigée dans le sens de l'inclinaison (70) des surfaces d'appui (58, 68).

4. Système de fixation selon la revendication 2 ou 3,
**caractérisé en ce que**
la surface frontale (66) de l'élément en caoutchouc (48) associée à l'élément de fixation (46) est formée par une bride (64) d'un manchon de guidage (62) en une matière dure qui vient prendre dans la partie (52) élastique de l'élément en caoutchouc (48).
